(19) Europäisches Patentamt
European Patent Office
Office européen des brevets

(11) Veröffentlichungsnummer : **0 092 702**
**B1**

(12) **EUROPÄISCHE PATENTSCHRIFT**

(45) Veröffentlichungstag der Patentschrift : **03.12.86**

(51) Int. Cl.[4] : **C 08 G 77/38**, C 08 G 77/06, C 08 G 63/76// C09D3/82

(21) Anmeldenummer : **83103341.0**

(22) Anmeldetag : **06.04.83**

(54) **Verfahren zur Herstellung eines mit Wasser verdünnbaren, wärmehärtbaren, mit organischen Polyolen modifizierten Organopolysiloxans.**

(30) Priorität : **22.04.82 DE 3214985**

(43) Veröffentlichungstag der Anmeldung : **02.11.83 Patentblatt 83/44**

(45) Bekanntmachung des Hinweises auf die Patenterteilung : **03.12.86 Patentblatt 86/49**

(84) Benannte Vertragsstaaten : **BE DE FR GB IT NL**

(56) Entgegenhaltungen :
**EP-A- 0 008 090**
**EP-A- 0 035 274**
**DE-A- 2 107 471**
**DE-A- 2 828 990**
**DE-B- 1 253 847**
**DE-B- 2 232 419**
**US-A- 4 035 332**

(73) Patentinhaber : **Th. Goldschmidt AG**
**Goldschmidtstrasse 100 Postfach 101461**
**D-4300 Essen 1 (DE)**

(72) Erfinder : **Koerner, Götz, Dr.**
**Kantorie 126**
**D-4300 Essen (DE)**
Erfinder : **Priesch, Manfred**
**Cäcilienhöhe 62**
**D-4350 Recklinghausen (DE)**
Erfinder : **Rau, Harald**
**Schmettaustrasse 11**
**D-4300 Essen (DE)**
Erfinder : **Schamberg, Eckehard, Dr.**
**Grotehang 6**
**D-4300 Essen (DE)**

**EP 0 092 702 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung eines nach Neutralisation mit Wasser verdünnbaren, wärmehärtbaren Bindemittels durch partielle Umsetzung eines Alkoxysiloxans mit einem mindestens difunktionellen, Carboxylgruppen aufweisenden Polyol, insbesondere in Gegenwart eines Katalysators.

Es ist bekannt, die Eigenschaften von wärmehärtbaren Siliconharzen durch Modifizierung mit organischen Verbindungen zu verbessern. Beispiele solcher organischer Verbindungen sind Polyesterpolyole. Die Umsetzungsprodukte vereinigen im ausgehärteten Zustand die guten Eigenschaften der Siliconharze mit denen der organischen Polyesterharze. Durch zusätzlichen Einbau von Carboxylgruppen gelingt es, derartige modifizierte Organopolysiloxane in eine wasserlösliche Form zu überführen, indem man die carboxylgruppenhaltigen, modifizierten Organopolysiloxane mit Aminen neutralisiert. Man verwendet vorzugsweise solche Amine, die unter Aushärtungsbedingungen aus dem Bindemittelsystem weitgehend entfernt werden.

So ist es z. B. aus der US-PS 4 035 332 bekannt, wasserlösliche, organisch modifizierte Siliconharze dadurch herzustellen, daß man ein Alkoxy- oder Hydroxygruppen enthaltendes Organosiloxan mit einem Polyester umsetzt, der aus einem Polyol und einer mehrbasischen Carbonsäure oder einem Polycarbonsäureanhydrid hergestellt worden ist und eine Säurezahl von 10 bis 150 aufweist. Als mehrbasische Carbonsäure oder als Polycarbonsäureanhydrid werden Phthalsäure oder Phthalsäureanhydrid, Fumarsäure, Maleinsäureanhydrid, Trimellitsäureanhydrid oder ähnlich aufgebaute Verbindungen verwendet.

In der US-PS 4 069 178 ist ein Verfahren zur Herstellung eines wasserlöslichen, siliconmodifizierten Alkydharzes beschrieben, wobei das Alkydharz ebenfalls mit einem Alkoxy- oder Hydroxygruppen enthaltenden Organopolysiloxan umgesetzt wird und wobei man dieses Umsetzungsprodukt mit einer mehrbasischen Carbonsäure weiter umsetzt, um Carboxylgruppen einzuführen.

Diese Bindemittel sind relativ hochviskos. Es ist deshalb notwendig, sie in größeren Mengen Lösungsmittel zu lösen, wobei sie neutralisiert und in wäßrige Lösung oder Dispersion überführt werden. Die wäßrige Zubereitung dieser Harze enthält deshalb erhebliche Mengen an organischen Lösungsmitteln, die gegebenenfalls vor oder bei der Aushärtung der Harze entfernt werden müssen.

Der Erfindung liegt die Aufgabe zugrunde, nach Neutralisation mit Wasser verdünnbare, organisch modifizierte Polysiloxane mit einer niedrigen Viskosität zu erhalten. Hierdurch soll es möglich werden, die Neutralisation der Siliconharze in Gegenwart nur geringer Mengen Lösungsmittel vorzunehmen. Es soll insbesondere erreicht werden, Harzlösungen mit 80 oder mehr Gew.-% Harzanteil zu neutralisieren. Die daraus hergestellten wäßrigen Zubereitungen weisen dann nur einen geringen Gehalt an organischen Lösungsmitteln auf. Dabei sollen aber die guten anwendungstechnischen Eigenschaften der modifizierten Siliconharze erhalten bleiben.

Diese erfindungsgemäße Aufgabe kann dadurch gelöst werden, daß man

a) als Alkoxysiloxan eine Verbindung der allgemeinen Formel

$$R_a^2Si(OR^1)_bO_{\frac{4-(a+b)}{2}}$$

verwendet, wobei

$R^1$ ein niederer Alkylrest mit bis zu 4 Kohlenstoffatomen,
$R^2$ eine Alkyl- oder Phenylgruppe,
a = 1,0 bis 1,2,
b = 0,5 bis 1,2 ist,

mit der Maßgabe, daß mindestens 50 Gew.-% des Alkoxysiloxans bei 1 bis 15 mbar destillierbar sind und Siloxane, die der Formel $[R^2Si(OR^1)O]_n$, n = 3 bis 8, entsprechen, bevorzugt sind,

b) als Polyol das Umsetzungsprodukt einer Verbindung der allgemeinen Formel

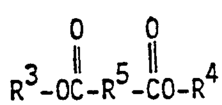

wobei $R^3$ und $R^4$ gleich oder verschieden sind und die Gruppe

$HO(CH_2)_2-$, 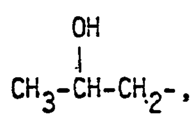, $HO(CH_2)_3-$, 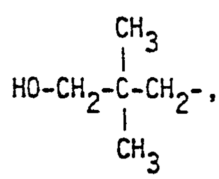,

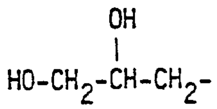, $(HOCH_2)_3C-CH_2-$, 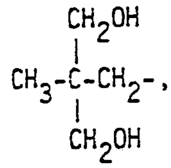,

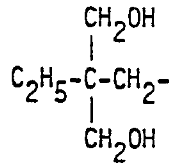

bedeuten, wobei die Gruppen

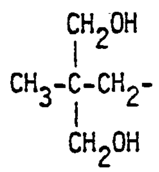, 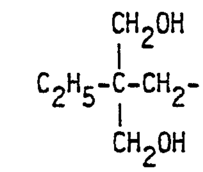

bevorzugt sind, und im Molekül mindestens drei Hydroxylgruppen enthalten sind,

$R^5$ eine Alkylen-, Cycloalkylen- oder Phenylengruppe ist,

mit einem Polycarbonsäuremonoanhydrid, wobei das Umsetzungsprodukt noch mindestens zwei Hydroxylgruppen enthalten muß, verwendet, und wobei man das Alkoxysiloxan mit dem Polyol bis zu einem Umsetzungsgrad von $\leq$ 70 % umsetzt, die Umsetzung jedoch mindestens so weit führt, daß eine klare Lösung erhalten wird. Vorzugsweise beträgt der Quotient $SiOR^1/COH$ = 0,8 bis 1,2.

Das erfindungsgemäße Verfahren ist somit insbesondere durch die Verwendung spezieller niedermolekularer Alkoxysiloxane und niedermolekularer, Carboxylgruppen aufweisender Polyole gekennzeichnet.

Das zur Umsetzung verwendete Alkoxysiloxan kann in an sich bekannter Weise z. B. dadurch hergestellt werden, daß man die entsprechenden Alkoxysilane bei Temperaturen von etwa 60 °C hydrolysiert und kondensiert. Bevorzugt sind solche Polysiloxane, welche die Bedingung erfüllen, daß mindestens 50 Gew.-% des Alkoxysiloxans der Formel $[R^2Si(OR^1)O]_n$ entsprechen, wobei n einen Wert von 3 bis 8 hat. Das Alkoxysiloxan enthält im allgemeinen etwa 80 Gew.-% Anteile, die bei einem verminderten Druck von etwa 1 bis 15 mbar destillierbar sind. Dieser niedermolekulare Aufbau des Alkoxysiloxans ist eine wesentliche Vorbedingung des erfindungsgemäßen Verfahrens, da er mitverantwortlich für die Bildung niedrigviskoser, modifizierter Organosiloxane ist. Dabei war es für den Fachmann überraschend, daß solche relativ niedermolekularen Alkoxysiloxane nach dem Umsatz mit Polyolen mit ausreichender Härtungsgeschwindigkeit vernetzt werden können.

$R^1$ ist in den Alkoxysiloxanen eine niedere Alkylgruppe mit 1 bis 4 Kohlenstoffatomen, die geradkettig oder im Falle der höheren Kohlenstoffzahl verzweigt sein kann. $R^2$ ist eine Alkyl- oder Phenylgruppe. Als Alkylgruppe ist die Methylgruppe bevorzugt. Besonders günstige Ergebnisse werden erhalten, wenn man Alkoxysiloxane verwendet, bei denen mehr als 5 % der Anzahl $R^2$-Gruppen Phenylgruppen sind.

Von erfindungswesentlicher Bedeutung ist jedoch auch die Auswahl des Polyols, welches mit dem Alkoxysiloxan umgesetzt wird. Diese Polyole sind ebenfalls niedermolekular. Die Polyole werden dadurch erhalten, daß man eine Verbindung der allgemeinen Formel

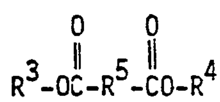

mit einem Polycarbonsäuremonoanhydrid umsetzt, wobei das Umsetzungsprodukt noch mindestens zwei Hydroxylgruppen enthalten muß.

$R^3$ und $R^4$ sind gleich oder verschieden und bedeuten die Gruppe

$HO(CH_2)_2-$, 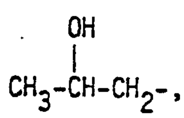, $HO(CH_2)_3-$, 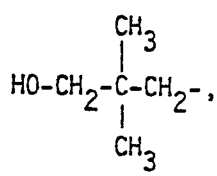,

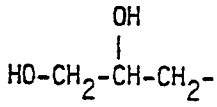, $(HOCH_2)_3C-CH_2-$, 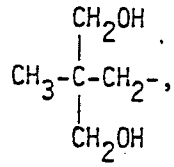, 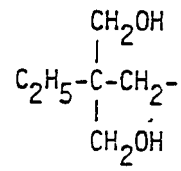

Die Gruppen

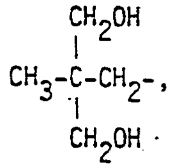, 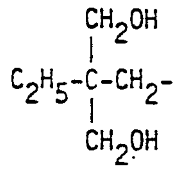

sind bevorzugt. Im Molekül müssen jedoch mindestens drei Hydroxylgruppen enthalten sein. Das bedeutet, daß die Gruppen

$HO(CH_2)_2-$, 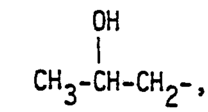, $HO(CH_2)_3-$, 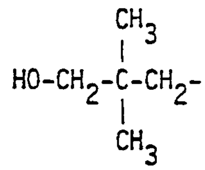

nicht gleichzeitig $R^3$ und $R^4$, sondern nur $R^3$ oder $R^4$ bedeuten können. Dieses Polyol wird mit solchen Mengen Polycarbonsäuremonoanhydrid umgesetzt, daß das Umsetzungsprodukt noch mindestens zwei Hydroxylgruppen enthalten muß. Geht man von einem Polyol aus, welches im Molekül drei OH-Gruppen aufweist, kann man es mit maximal 1 Mol Polycarbonsäuremonoanhydrid umsetzen. Hat das Molekül vier Hydroxylgruppen, kann man es maximal mit 2 Mol Polycarbonsäuremonoanhydrid umsetzen. Bezeichnet man die Anzahl der OH-Gruppen des Polyols mit p, so kann man maximal p-2 Mol Polycarbonsäuremonoanhydrid mit dem Polyol umsetzen.

$R^5$ hat die Bedeutung einer zweiwertigen Kohlenwasserstoffbrücke. $R^5$ ist deshalb eine Alkylen-, Cycloalkylen- oder Phenylengruppe. Ist $R^5$ eine Alkylengruppe, weist diese vorzugsweise 3 bis 7 Kohlenstoffatome auf. Ist $R^5$ eine Cycloalkylengruppe, ist die Cyclohexylengruppe bevorzugt. Besonders bevorzugt sind die 1.4- und 1.3-Phenylengruppen. Herstellungsbedingt können in untergeordneter Menge auch Oligo-Esterpolyole dieser Verbindungen enthalten sein. Unter Oligo-Esterpolyolen sollen dabei solche Verbindungen verstanden werden, in denen die Dicarbonsäureeinheit mehr als einmal vorkommt.

Als Polycarbonsäuremonoanhydrid kann man Phthalsäureanhydrid, Tetrahydrophthalsäureanhydrid Maleinsäureanhydrid, Trimellitsäureanhydrid, Hexahydrophthalsäureanhydrid verwenden. Besonders bevorzugt wird Phthalsäureanhydrid oder Trimellitsäureanhydrid verwendet, da die hiermit hergestellten Bindemittel besonders vergilbungsresistent sind.

Das Alkoxysiloxan und das Polyol werden vorzugsweise in solchen Mengen miteinander umgesetzt daß der Quotient $SiOR^1/COH = 0,8$ bis 1,2 ist. Besonders bevorzugt ist ein Quotient von etwa 1.

Die Umsetzung der Reaktionspartner wird bis zu einem maximalen Umsetzungsgrad von 70 % geführt und dann abgebrochen. Die restliche Umsetzung und die damit verbundene Aushärtung des Produktes erfolgt auf der zu beschichtenden Oberfläche. Wählt man einen niedrigeren Umsetzungsgrad so ist jedoch zu beachten, daß die Umsetzung so weit geführt sein soll, daß eine klare Lösung der Produkte ineinander erhalten wird. Diese Verträglichkeit hängt von der Art des verwendeten Alkoxysiloxans und des Polyols ab. Im allgemeinen werden die Ausgangsprodukte und die Umsetzungsprodukte miteinander bei einem Umsatz von etwa 40 bis 50 % verträglich. Diese Lösungen bleiben dann auch nach dem Abkühlen noch klar.

Die Umsetzung der Alkoxysiloxane und die Aushärtung erfolgen unter Verwendung von Katalysatoren. Aus dem Stand der Technik sind hierfür Titansäureester bekannt. Sie können auch beim erfindungsgemäßen Verfahren eingesetzt werden. Beispiel eines solchen Titansäureesters ist Tetrabutyltitanat.

Dieser Katalysator kann auch für die Härtung des Verfahrensproduktes beim Einbrennen verwendet werden. Es hat sich jedoch gezeigt, daß besonders günstige Eigenschaften der eingebrannten Beschichtung dann erhalten werden, wenn man als Härtungskatalysator dem partiellen Umsetzungsprodukt eine Verbindung in Mengen von 0,2 bis 1,5 Gew.-%, bezogen auf Festharz, zusetzt, die durch Umsetzung von 2 Mol des Polyols der Formel

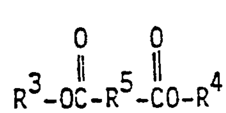

2 bis 4 Mol Phthalsäure- oder Trimellitsäuremonoanhydrid und 1 Mol $Ti(OR^6)_4$ erhalten worden ist. $R^3$, $R^4$ und $R^5$ haben die bereits angegebene Bedeutung. Jedoch können $R^3$ und $R^4$ unabhängig von der Art der Gruppe gleich oder verschieden sein. Dabei ist jedoch die Bedingung zu erfüllen, daß das mit Anhydrid umgesetzte Polyol noch mindestens eine freie OH-Gruppe aufweist. $R^6$ ist dabei eine Alkylgruppe mit 1 bis 6 Kohlenstoffatomen. Bei Verwendung dieses Umsetzungsproduktes als Katalysator wird die Lagerstabilität der Harze, die Vernetzungsdichte der eingebrannten Harze, deren mechanische und chemische Belastbarkeit insbesondere durch wäßrige Medien erhöht. Ein Vorteil des Katalysators ist auch seine gute Löslichkeit in dem partiellen Umsetzungsprodukt aus Alkoxysiloxan und erfindungsgemäß zu verwendendem Polyol.

Die erfindungsgemäß hergestellten Bindemittel weisen die geforderte niedrige Viskosität auf. Lösungen mit 80 Gew.-% Harzgehalt haben z. B. eine Viskosität von etwa 2 000 bis 5 000 $mm^2sec^{-1}$ bei 25 °C. Lösungen dieser Viskosität lassen sich gut handhaben, so daß die Neutralisation der erfindungsgemäß hergestellten Bindemittel mit insbesondere niedrigsiedenden Aminen, wie z. B. Triethylamin oder Dimethylethanolamin, ohne Schwierigkeiten durchführbar ist.

Wäßrige Zubereitungen auf der Basis der erfindungsgemäß hergestellten Bindemittel ergeben auf einer Vielzahl von Untergründen Beschichtungen guter anwendungstechnischer Eigenschaften. Vorzugsweise eignen sich die erfindungsgemäß hergestellten Bindemittel zur Beschichtung von Metallblechen oder von aus Metallen hergestellten Gegenständen. Die Beschichtungen zeichnen sich durch hohe Flexibilität, geringe thermische Plastizität und hohe thermische Belastbarkeit aus. Dabei sind die niedrigen Aushärtungszeiten besonders vorteilhaft.

Das erfindungsgemäße Verfahren wird anhand des nachfolgenden Beispiels noch näher erläutert. Dabei werden die anwendungstechnischen Eigenschaften der erfindungsgemäß hergestellten Bindemittel gezeigt.

## Beispiel

a) Herstellung eines Carboxylgruppen enthaltenden Esterpolyols

194 g (1 Mol) Dimethylterephthalat, 268 g (2 Mol) 2.2-Dihydroxymethylbutan(1)ol (Trimethylolpropan) und 35 g Diglykoldimethylether werden in einem Kolben aufgeheizt. Bei Erreichen einer Temperatur von 140 °C werden 0,5 g Mg-Acetat zugesetzt. Nun wird die Temperatur innerhalb von 3 Std. auf 240 °C gesteigert. Während dieser Zeit werden 89 g Destillat abgenommen ; davon sind 64 g Methanol. Der Kolbeninhalt wird langsam abgekühlt. Bei Erreichen einer Temperatur von 140 °C werden 230 g (1.55 Mol) Phthalsäureanhydrid sowie 100 g Diglykoldimethylether zugesetzt, die Lösung 30 Min. bei 140 °C gehalten und dann auf RT abgekühlt. Das Produkt ist 85 %ig. Die gelchromatographische Analyse hat einen Gehalt an Oligo-Esterpolyol von 35 % ergeben.

b) Herstellung eines Phenylethoxypolysiloxans

240 g (1 Mol) Phenyltriethoxysilan werden mit 100 g wasserfreiem Ethanol versetzt, und dann wird die Lösung unter Rühren auf 60 °C aufgeheizt. Bei dieser Temperatur wird ein Gemisch aus 162 g Ethanol und 18 g (1 Mol) Wasser innerhalb von 30 Min. zugetropft. Als Hydrolysekatalysator dienen im Ausgangssilan vorhandene HCl-Reste. Anschließend wird das überschüssige Ethanol unter vermindertem Druck abdestilliert.

Das Polymerengemisch hat einen mittleren Ethoxygehalt von 25 % ; 80 % des Produktes sind bei 180 °C/2,7 mbar destillierbar, und dieses Destillat hat einen Ethoxywert von 27 % und ein Molgewicht von 830. Es entspricht damit der Formel $[C_6H_5—Si(OC_2H_5)O]_5$.

c) Herstellung eines modifizierten Organopolysiloxans

738 g des nach a) hergestellten Esterpolyols (85 %ig) werden gemeinsam mit 628 g des nach b) hergestellten Phenylethoxypolysiloxans und 1,5 g Tetrabutyltitanat, gelöst in 13,5 g Diglykoldimethylether auf 135 °C aufgeheizt. Innerhalb von 30 Min. werden 85 g Destillat abgenommen. Das Produkt wird gekühlt und bei Erreichen von 80 °C mit 195 g Isopropanol auf einen theoretischen Festkörper von 80 % eingestellt. Die Viskosität des Produktes liegt bei 3 500 $mm^2sec^{-1}$/25 °C, die Säurezahl bei 58 mg KOH

d) Herstellung eines Härtungskatalysators

44,3 g (85 %ig ; 0,06 Mol) des unter a) hergestellten Esterpolyols werden gemeinsam mit 10 g Diglykoldimethylether zu einer auf 130 °C aufgeheizten Lösung aus 10 g (0,03 Mol) Tetrabutyltitanat, gelöst in 15 g Diglykoldimethylether langsam zugetropft. Während des Zutropfens wird Butanol abdestilliert. Unmittelbar nach dem Zutropfen beträgt die Destillatmenge 7 g. Das Produkt wird abgekühlt.

e) Anwendungstechnische Prüfung

Herstellung weißpigmentierter Wasserlacke

50 g des nach c) hergestellten modifizierten Organopolysiloxans (Festkörper 80 %) werden unter Rühren mit 3,7 g Dimethylethanolamin versetzt. Nach 10 Min. werden 40 g Titandioxid zusammen mit 70 g deionisierten Wassers und etwa 10 ml Glasperlen (Ø 2 mm) zugegeben. Die Mischung wird 1 Std. geschüttelt. Anschließend werden die Glasperlen über einem Sieb entfernt. Der Lack hat einen Festkörper von ca. 50 % (Lackprobe 1).

In der soeben beschriebenen Weise wird ein weißpigmentierter Wasserlack hergestellt, wobei dem modifizierten Organopolysiloxan 0,6 Gew.-% der nach d) hergestellten Katalysatorlösung zugesetzt werden. Die Katalysatormenge ist bezogen auf Bindemittelfeststoff (Lackprobe 2).

Die Wasserlacke werden mit einer 100 µm-Rakel auf Testbleche (Bonder 1401 AL) aufgezogen. Nach einer Ablüftzeit von 15 Min. werden die beschichteten Bleche bei 270 °C 10 Min. lang ausgehärtet.

Die Prüfung der beschichteten Bleche ergibt folgende Werte :

| | 1) | 2) |
|---|---|---|
| Härte nach Wolff-Wilborn | | |
| bei 20°C | 3 H | 4 H |
| bei 150°C | 3 H | 4 H |
| Gilbung nach Hunter Lab. | | |
| b-Wert Nullprobe | ± 0 | - 0,3 |
| nach 3 h/300°C | + 1,3 | + 1,1 |
| Haftung | | |
| Gitterschnitt nach DIN | | |
| Nullprobe | GTO | GTO |
| nach 3 h/300°C | GTO | GTO |
| Detergentientest | mäßiger Angriff | leichter Angriff |
| nach 3 Std. | starker Glanzverlust, starke Kreidung | leichter Glanzverlust, leichte Kreidung |

**Patentansprüche**

1. Verfahren zur Herstellung eines nach Neutralisation mit Wasser verdünnbaren, wärmehärtbaren Bindemittels durch partielle Umsetzung eines Alkoxysiloxans mit einem mindestens difunktionellen, Carboxylgruppen aufweisenden Polyol, insbesondere in Gegenwart eines Katalysators, dadurch gekennzeichnet, daß man

a) als Alkoxysiloxan eine Verbindung der allgemeinen Formel

$$R_a^2Si(OR^1)_bO_{\frac{4-(a+b)}{2}}$$

verwendet, wobei

$R^1$ ein niederer Alkylrest mit bis zu 4 Kohlenstoffatomen,

$R^2$ eine Alkyl- oder Phenylgruppe,

a = 1,0 bis 1,2,

b = 0,5 bis 1,2 ist,

mit der Maßgabe, daß mindestens 50 Gew.-% des Alkoxysiloxans bei 1 bis 15 mbar destillierbar sind und Siloxane, die der Formel $[R^2Si(OR^1)O]_n$, n = 3 bis 8, entsprechen, bevorzugt sind,

b) als Polyol das Umsetzungsprodukt einer Verbindung der allgemeinen Formel

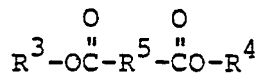

wobei $R^3$ und $R^4$ gleich oder verschieden sind und die Gruppen

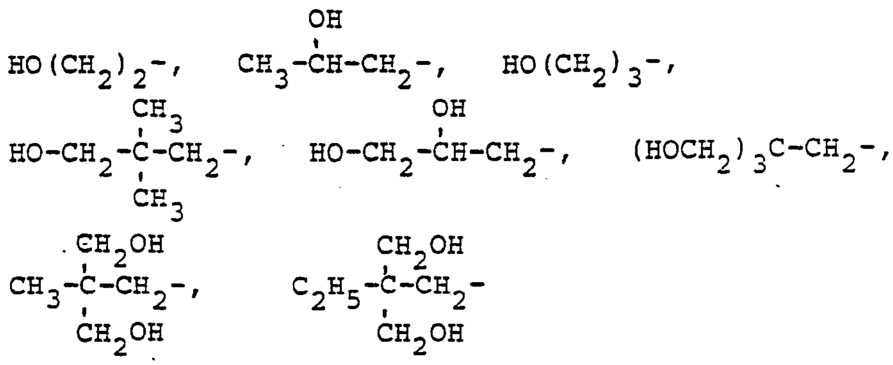

bedeuten, jedoch im Molekül mindestens drei Hydroxylgruppen enthalten sind, $R^5$ eine Alkylen-, Cycloalkylen- oder Phenylengruppe ist, mit einem Polycarbonsäuremonoanhydrid, wobei die eingesetzte Molmenge an Polycarbonsäuremonoanhydrid, bezogen auf die Verbindung

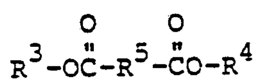

um mindestens 2 geringer ist als die Zahl der OH-Gruppen der vorgenannten Verbindung, verwendet, und wobei man das Alkoxysiloxan mit dem Polyol bis zu einem Umsetzungsgrad von $\leq 70\%$ umsetzt, die Umsetzung jedoch mindestens so weit führt, daß eine klare Lösung erhalten wird.

2. Verfahren nach Anspruch 1, dadurch gekennzeichnet, daß Alkoxysiloxan und Polyol in solchen Mengen eingesetzt werden, daß der Quotient $SiOR^1/COH$ = 0,8 bis 1,2 ist.

3. Verfahren nach Anspruch 1, dadurch gekennzeichnet, daß ein Polyol eingesetzt wird, bei dem $R^5$ eine 1.4- oder eine 1.3-Phenylengruppe ist.

4. Verfahren nach Anspruch 1, dadurch gekennzeichnet, daß man als Polycarbonsäureanhydrid Phthalsäureanhydrid oder Trimellitsäuremonoanhydrid verwendet.

5. Verfahren nach Anspruch 1, dadurch gekennzeichnet, daß man Alkoxysiloxane, bei denen mehr als 5 % der Gruppen $R^2$ Phenylgruppen sind, verwendet.

**Claims**

1. Process for the preparation of a heat-curable binder, which is water-dilutable after neutralization, by partial reaction of an alkoxysiloxane with an at least difunctional polyol possessing carboxyl groups, in particular in the presence of a catalyst, characterized in that

a) the alkoxysiloxane used is a compound of the general formula

$$R_a^2Si(OR^1)_bO_{\frac{4-(a+b)}{2}}$$

wherein

$R^1$ is a lower alkyl radical with up to 4 carbon atoms,
$R^2$ is an alkyl or phenyl group,
a is 1.0 to 1.2 and
b is 0.5 to 1.2,

with the proviso that at least 50 % by weight of the alkoxysiloxane are distillable at 1 to 15 mbar and that siloxanes which correspond to the formula $[R^2Si(OR^1)O]_n$, where n = 3 to 8, are preferred,

b) the polyol used is the reaction product of a compound of the general formula

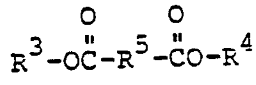

wherein $R^3$ and $R^4$ are identical or different and denote the groups

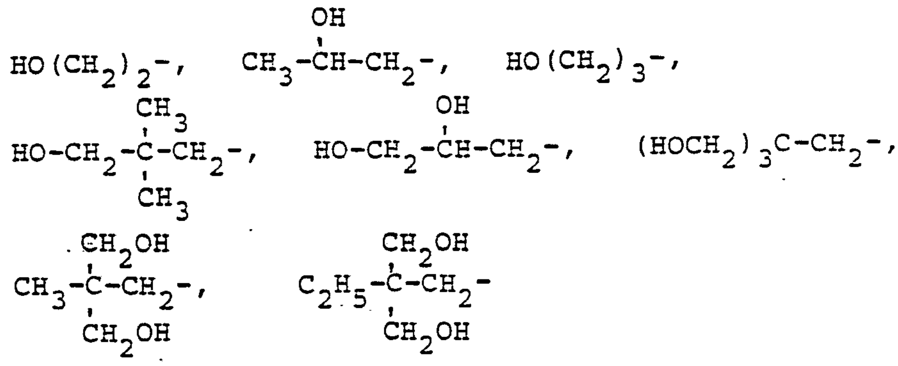

but the molecule contains at least three hydroxyl groups, and $R^5$ is an alkylene, cycloalkylene or phenylene group, with a polycarboxylic acid monoanhydride, the molar amount of polycarboxylic acid monoanhydride, relative to the compound

$$R^3-O\overset{O}{\overset{\|}{C}}-R^5-\overset{O}{\overset{\|}{C}}O-R^4$$

being lower by at least 2 than the number of OH groups of the abovementioned compound, and the alkoxysiloxane being reacted with the polyol to a degree of conversion of ≤ 70%, but the reaction being taken at least sufficiently far to give a clear solution.

2. Process according to Claim 1, characterized in that the alkoxysiloxane and polyol are employed in such amounts that the quotient SiOR/COH = 0.8 to 1.2.

3. Process according to Claim 1, characterized in that a polyol in which $R^5$ is a 1,4- or 1,3-phenylene group is employed.

4. Process according to Claim 1, characterized in that the polycarboxylic acid anhydride employed is phthalic anhydride or trimellitic monoanhydride.

5. Process according to Claim 1, characterized in that alkoxysiloxanes in which more than 5 % of the $R^2$ groups are phenyl groups are used.

**Revendications**

1. Procédé pour la préparation d'un liant thermodurcissable, diluable à l'eau après neutralisation, par réaction partielle d'un alcoxysiloxane sur un polyol au moins bifonctionnel, contenant des groupes carboxyle, en particulier en présence d'un catalyseur, caractérisé en ce qu'on utilise

a) en tant qu'alcoxysiloxane un composé de formule générale

$$R_a^2Si(OR^1)_bO_{\frac{4-(a+b)}{2}}$$

dans laquelle

$R^1$ est un radical alkyle inférieur ayant jusqu'à 4 atomes de carbone,
$R^2$ est un groupe alkyle ou phényle,
a = 1,0 à 1,2,
b = 0,5 à 1,2,

à la condition qu'au moins 50 % en poids de l'alcoxysiloxane soient distillables à 1 à 15 mbar et que soient préférés les siloxanes correspondant à la formule $(R^2Si(OR^1)O)_n$, n = 3 à 8,

b) en tant que polyol le produit de la réaction d'un composé de formule générale

$$R^3-O\overset{O}{\overset{\|}{C}}-R^5-\overset{O}{\overset{\|}{C}}O-R^4$$

dans laquelle les radicaux $R^3$ et $R^4$ sont identiques ou différents et représentent les groupes

$HO(CH_2)_2-$, $CH_3-\overset{OH}{\overset{|}{C}}H-CH_2-$, $HO(CH_2)_3-$,

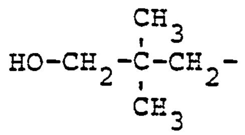, 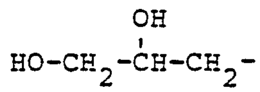, $(HOCH_2)_3C-CH_2-$,

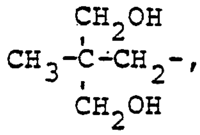, 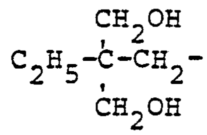

la molécule contenant cependant au moins trois groupes hydroxyle, $R^5$ est un groupe alkylène, cycloalkylène ou phénylène, sur un monoanhydride d'acide polycarboxylique, la quantité molaire utilisée de monoanhydride d'acide polycarboxylique par rapport au composé

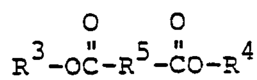

étant d'au moins 2 inférieure au nombre des groupes OH du composé mentionné ci-dessus, l'alcoxysiloxane étant mis à réagir avec le polyol jusqu'à un taux de conversion $\leq 70$ %, la réaction étant poursuivie au moins jusqu'à ce que l'on obtienne une solution claire.

2. Procédé selon la revendication 1, caractérisé en ce qu'on utilise l'alcoxysiloxane et le polyol en des quantités telles que le quotient $SiOR^1/COH$ soit égal à 0,8 à 1,2.

3. Procédé selon la revendication 1, caractérisé en ce qu'on utilise un polyol dans lequel $R^5$ est un groupe 1,4- ou 1,3-phénylène.

4. Procédé selon la revendication 1, caractérisé en ce qu'on utilise comme anhydride d'acide polycarboxylique l'anhydride phtalique ou le monoanhydride trimellitique.

5. Procédé selon la revendication 1, caractérisé en ce qu'on utilise des alcoxysiloxanes dans lesquels plus de 5 % des groupes $R^2$ sont des groupes phényle.